# FASCICULE DE BREVET EUROPEEN

(11) **EP 0 640 570 B1**
(45) Date de publication et mention de la délivrance du brevet: **13.01.1999**
(21) Numéro de dépôt: 94401679.9
(22) Date de dépôt: 21.07.1994
(51) Int. Cl.: C03B 37/16, C03C 25/02

(54) **Procédé de fabrication de fils coupés et dispositif associé**
Verfahren zur Herstellung von geschnittenen Fasern und Vorrichtung dafür
Process for making chopped fibres and device therefor

(30) Priorité: 29.07.1993 FR 9309322
(43) Date de publication de la demande: 01.03.1995
(73) Titulaire: VETROTEX FRANCE, 73000 Chambéry (FR)
(72) Inventeur: Augier, Eric, F-73000 Barberaz (FR); Johnson, Timothy, F-73160 Vimines (FR); Moireau, Patrick, F-73190 Curienne (FR)
(74) Mandataire: Breton, Jean-Claude

(56) Documents cités:
- EP-A- 0 225 234
- EP-A- 0 243 275
- WO-A-92/05122
- FR-A- 2 441 005
- US-A- 3 869 268
- US-A- 4 043 779
- US-A- 4 045 196
- US-A- 5 192 387
- PATENT ABSTRACTS OF JAPAN vol. 16 no. 207 (C-941) ,18 Mai 1992 & JP-A-04 037634 (NITTO BOSEKI CO. LTD.) 7 Février 1992,

## Description

La présente invention concerne un procédé de fabrication de fils coupés à partir de fils revêtus d'un mélange susceptible de réagir sous l'action d'un rayonnement actinique se trouvant à l'état liquide.

Plus précisément, l'invention concerne un procédé de fabrication de fils coupés à partir de fils continus destinés notamment à servir de renforts tels que des fils de verre, lesdits fils étant composés de filaments revêtus d'une composition d'ensimage à base de composés susceptibles de réagir sous l'action d'un rayonnement actinique. La présente invention concerne également un dispositif de mise en oeuvre dudit procédé.

Les fils coupés sont communément employés pour le renforcement de matrices diverses telles que résines thermoplastiques, résines thermodurcissables, plâtre, ciment ou papier.

Il est connu de fabriquer directement ces fils coupés à partir d'une ou plusieurs installations de fibrage de la manière suivante: des filets de verre fondu s'écoulant des orifices d'une ou plusieurs filières sont étirés mécaniquement sous forme de filaments, puis revêtus sous cette dernière forme d'une composition d'ensimage avant rassemblement en fils et coupe desdits fils, I'étirage mécanique étant réalisé par la roue enclume de l'organe de coupe.

L'ensimage utilisé pour le revêtement des filaments permet, entre autres, d'assurer la liaison des filaments entre eux et la protection des fils contre l'abrasion, tout en leur conférant les propriétés indispensables aux transformations ultérieures. Les ensimages les plus communément employés sont les ensimages aqueux, lesquels comprennent généralement de l'ordre de 90 % en poids d'eau. Cette présence d'eau en quantité non négligeable peut nuire au bon déroulement du procédé et oblige à prévoir des moyens de réduction du taux d'humidité à différentes étapes.

Avant coupe, une partie de l'eau est éliminée par frottement au niveau du dispositif d'assemblage des filaments. Cette diminution du taux d'humidité peut néanmoins se révéler insuffisante. Il peut notamment se produire un collage des fils entre eux après coupe ainsi qu'un collage de ces mêmes fils sur les organes servant à les collecter. Des moyens de réduction de l'humidité avant coupe existent et, notamment, celui décrit dans le brevet WO 92/05122.

D'autres moyens existent pour réduire le taux d'humidité après coupe et avant utilisation des fils coupés pour le renforcement des matrices, l'eau pouvant nuire à la bonne adhésion verre-matrice et aux propriétés de vieillissement du composite obtenu. Le brevet FR 2 253 718 décrit ainsi un procédé pour la fabrication de fils coupés, procédé au cours duquel la teneur en humidité des fils est réduite après coupe par passage des fils coupés sous une série de lampes infrarouges ou dans un four à circulation d'air.

Il est certain cependant que la ou les étapes de séchage peuvent limiter la productivité ou impliquent l'utilisation de dispositifs relativement lourds tout en requérant une consommation d'énergie plus importante.

D'autres procédés sont connus, dans le cas de fils continus, et notamment un procédé au cours duquel un mélange réagissant sous l'action d'un rayonnement U.V. est déposé sur des filaments pendant l'opération de fibrage avant rassemblement desdits filaments en au moins un fil et exposition du ou des fils, en cours d'étirage, à un rayonnement U.V. Ce procédé, décrit dans le brevet EP-B1-243 275, ne fait pas mention d'une étape de séchage, mais impose de travailler avec des compositions d'ensimage très réactives et en présence d'un taux de photoamorceurs important du fait de la vitesse élevée d'étirage des filaments sous filière. De plus, les fils obtenus selon ce procédé supportent difficilement flexion et cisaillement lors de la coupe et des problèmes de bourre ou de défibrage peuvent survenir au niveau des dispositifs assurant cette opération.

Un premier objet de l'invention est donc de proposer un nouveau procédé pour la fabrication de fils coupés, ce procédé ne présentant pas les inconvénients précédemment évoqués.

La présente invention a également pour objet un procédé de fabrication de fils coupés permettant d'obtenir des fils dont les caractéristiques sont régulières sur toute leur longueur.

Enfin, la présente invention a pour objet un dispositif de mise en oeuvre du procédé susmentionné.

Ces buts sont atteints en premier lieu grâce à un procédé de fabrication de fils coupés selon lequel des fils de verre composés de filaments continus revêtus d'un ensimage non aqueux, à l'état liquide et susceptible de réagir sous l'action d'un rayonnement actinique, sont coupés par un organe servant également à les étirer ou à les entraîner mécaniquement avant d'être soumis à un rayonnement actinique.

Signalons que l'expression 〈〈 ensimage non aqueux 〉〉 selon l'invention désigne une composition d'ensimage comprenant moins de 10 % d'eau, la présence d'eau pouvant être nécessaire dans certains cas, notamment dans des compositions acryliques pour faciliter l'hydrolyse de silanes.

L'invention recouvre également un dispositif de mise en oeuvre du procédé précédemment défini et comprenant au moins un organe de coupe et d'étirage ou un organe de coupe et d'entraînement des fils ensimés ainsi qu'au moins un organe récepteur des fils coupés, lesdits fils coupés tombant par simple gravité d'un organe sur un autre, et au moins une source de rayonnement actinique dirigée vers l'une des zones de chute des fils coupés d'un organe sur un autre et/ou une source de rayonnement actinique dirigée vers une zone d'un organe récepteur et associée avec au moins un organe de soufflage situé sous ladite zone.

Le procédé selon l'invention présente de nombreux avantages par rapport aux procédés précédemment mentionnés, avantages qui seront mis en évidence au cours de la description suivante.

Un des principaux avantages du procédé selon l'invention est d'utiliser un ensimage non aqueux, ci-dessus défini, et susceptible de réagir sous l'action d'un rayonnement actinique, et de soumettre les fils à une irradiation après coupe. Le fait d'utiliser un ensimage non aqueux selon l'invention supprime en effet la nécessité de recourir à un séchage des fils et permet ainsi, en premier lieu, de réaliser une économie d'énergie tout en augmentant la productivité.

Par ailleurs, le fait d'effectuer l'irradiation après coupe évite les problèmes de défibrage ou de bourre rencontrés précédemment dans le procédé effectuant une irradiation en cours d'étirage avant coupe. La cohésion des filaments au sein des fils est conservée lors de la coupe par les propriétés adhésives et visqueuses de l'ensimage avant irradiation et l'intégrité des fils coupés ainsi obtenus est améliorée.

Le procédé selon l'invention peut être soit un procédé direct, soit un procédé indirect, le choix du procédé dépendant notamment de l'application recherchée. Le procédé indirect, dans lequel les fils devant être coupés sont issus d'enroulements et sont entraînés mécaniquement par l'organe de coupe, s'applique, préférentiellement, au cas où le taux d'ensimage à déposer sur les fils est élevé (supérieur à 5 % en poids), par exemple pour des fils destinés à renforcer du ciment.

Dans la plupart des cas néanmoins, le procédé selon l'invention est avantageusement un procédé direct dans lequel des filaments formés par étirage de filets de verre fondu à partir des orifices d'une ou plusieurs filières sont revêtus d'un ensimage non aqueux, à l'état liquide et susceptible de réagir sous l'action d'un rayonnement actinique, avant d'être rassemblés en au moins un fil, le ou lesdits fils étant subséquemment coupés par un organe servant également à les étirer avant d'être soumis à un rayonnement actinique.

Comme mentionné plusieurs fois déjà, l'irradiation des fils ensimés selon l'invention se produit, que le procédé soit direct ou indirect, après coupe. Cette irradiation peut se faire à différents niveaux, comme explicité ci-après.

Selon un premier mode de réalisation de la présente invention, les fils coupés sont soumis à l'action d'un rayonnement actinique directement après coupe et avant collecte sur un organe récepteur.

Selon l'une des variantes préférées de ce mode, les fils coupés ainsi préalablement irradiés sont collectés sur un organe récepteur tel qu'un convoyeur en mouvement et soumis, sur ledit organe, à l'action d'au moins une seconde source de rayonnement actinique pour parachever la réticulation de l'ensimage.

Les fils coupés obtenus selon le mode précité peuvent ensuite être transférés sur un autre organe récepteur, tel qu'un autre convoyeur en mouvement.

Il est aussi possible, selon une autre variante du mode précédemment mentionné, d'effectuer, en plus de l'irradiation des fils coupés après la coupe et avant réception sur un premier organe récepteur, une irradiation des fils lors du transfert des fils du premier organe récepteur à un second organe récepteur, avec ou sans irradiation intermédiaire.

Selon un autre mode de réalisation de l'invention, les fils coupés sont soumis à une irradiation en premier lieu sur un organe récepteur et/ou lors du transfert d'un organe récepteur à un autre. De préférence notamment, les fils coupés sont d'abord collectés sur un premier organe récepteur tel qu'un convoyeur en mouvement, puis soumis à l'action d'un rayonnement actinique entre le premier organe récepteur et un second organe récepteur qui peut également être un convoyeur en mouvement.

Avantageusement, dans tous les modes de réalisation précités, l'organe récepteur recevant les fils juste après coupe est un convoyeur en mouvement soumis à des vibrations. Les fils tombant sur un tel convoyeur sont ainsi mieux répartis sur ledit convoyeur et leur surface est exposée plus complètement à une éventuel rayonnement au niveau de ce même convoyeur. De plus, les fils au sortir d'un tel organe récepteur, tombent sous la forme d'un rideau, présentation qui permet d'irradier assez uniformément l'ensemble des fils coupés lors de leur chute et qui permet un transfert plus régulier des fils sur un autre organe récepteur.

Par ailleurs, dans un mode de réalisation préféré de l'invention, un organe de soufflage se trouve sous au moins une partie du convoyeur recevant les fils juste après coupe. Cet organe de soufflage permet notamment d'éviter le collage et l'accumulation sur la surface du convoyeur des fils enduits d'ensimage non encore exposés à un rayonnement actinique et permet également une meilleure exposition des fils à un éventuel rayonnement au niveau dudit convoyeur. De préférence, les dispositifs d'irradiation dirigés vers des organes récepteurs selon l'invention sont associés à de tels organes de soufflage pour éviter tout collage des fils sur les organes récepteurs pendant l'irradiation, particulièrement dans le cas où les fils n'ont pas été irradiés au préalable.

Selon un mode de réalisation particulièrement préféré de l'invention, les fils coupés sont collectés sur un organe récepteur soumis à des vibrations et exposés à un rayonnement actinique sur une partie dudit organe au-dessous de laquelle se trouve un organe de soufflage.

Les différents modes de réalisation de la présente invention, exemplifiés de manière non exhaustive dans la précédente description, offrent l'avantage d'allonger de façon importante, dans la plupart des cas, la durée d'irradiation des fils coupés ensimés par rapport au procédé d'irradiation avant coupe.

Le temps d'irradiation peut ainsi atteindre plusieurs secondes notamment lorsque l'irradiation se fait sur les organes récepteurs ou entre deux organes récepteurs, ladite irradiation se faisant alors à des vitesses de déplacement des fils bien moins importantes que les vitesses d'étirage. Il n'est donc pas nécessaire, dans ces cas là, d'avoir recours à des ensimages particulièrement réactifs et souvent plus coûteux.

De ce fait, le domaine des formulations d'ensimage utilisables dans le cadre de la présente invention est considérablement élargi, certains produits de réactivité jugée insuffisante dans des procédés d'irradiation en cours d'étirage pouvant désormais être employés, dans la mesure où ils sont compatibles avec les matières à renforcer. De même, du fait de cette formulation large, la gamme des produits que l'on peut fabriquer selon l'invention est plus étendue. On peut ainsi utiliser, selon l'invention, des compositions d'ensimage à base de monomères uréthanes monoacrylates compatibles avec les matières du type polyamide ou des compositions à base d'éthers vinyliques, d'oxirannes... Notons cependant qu'il n'est pas exclu d'utiliser selon l'invention des compositions d'ensimage à base de produits très réactifs, par exemple, dans les procédés directs, pour des vitesses d'étirage des fils particulièrement élevées obligeant à des vitesses de transfert des fils après coupe plus importantes.

Un autre avantage du procédé selon l'invention est de permettre, dans le cas où le type d'irradiation employé impose leur présence, l'utilisation de photoamorceurs dans des proportions nettement inférieures à celles des compositions d'ensimage susceptibles de réagir sous l'action d'un rayonnement actinique employées dans les procédés par irradiation avant coupe précédemment évoqués.

Ainsi, pour des procédés directs, dans le cas où des photoamorceurs sont nécessaires et pour des vitesses d'étirage et des taux de conversion semblables, une composition d'ensimage susceptible de réagir sous l'action d'un rayonnement actinique selon le procédé par irradiation avant coupe comprendra, de préférence, de 7 à 12 % en poids de photoamorceur, tandis que la composition d'ensimage selon l'invention ne contiendra que de 2 à 5 % en poids de photoamorceur. Les compositions d'ensimage selon l'invention sont ainsi plus économiques.

Notons, en outre, que le procédé selon l'invention permet l'utilisation de dispositifs plus légers. En effet, il n'est pas nécessaire de prévoir des moyens de séchage; de plus, plusieurs organes de coupe peuvent être regroupés par organe de transfert, une seule source d'irradiation pouvant être, dans ce cas, suffisante.

Comme explicité plus haut, le dispositif de mise en oeuvre du procédé selon l'invention comprend au moins un organe de coupe et d'étirage ou un organe de coupe et d'entraînement des fils ensimés, un organe récepteur des fils coupés et une source d'irradiation, la source d'irradiation se trouvant après l'organe de coupe.

De préférence, l'organe récepteur situé sous le dispositif de coupe et d'étirage ou sous le dispositif de coupe et d'entraînement est un tapis métallique vibrant permettant une meilleure répartition et orientation des fils et, avantageusement, le ou les organes récepteurs, particulièrement les organes récepteurs vers lesquels des sources d'irradiation sont dirigées, sont des convoyeurs métalliques, d'entretien aisé et ne risquant pas d'être altérés par les rayonnements.

Ainsi qu'explicité précédemment, le dispositif selon l'invention comprend au moins une source d'irradiation dirigée vers l'une des zones de chute des fils coupés d'un organe sur un autre et/ou une source d'irradiation dirigée vers une zone d'un organe récepteur sous laquelle est situé un organe de soufflage. Dans le cas où l'on utilise ledit organe de soufflage, le convoyeur vers lequel il est dirigé est perforé, la source d'irradiation protégée des courants gazeux par une plaque de silice et un caisson permettant l'évacuation de ces courants est aménagé autour de ladite source.

Trois modes de réalisation de l'invention en rapport avec trois dispositifs de mise en oeuvre du procédé selon l'invention sont illustrés ci-après à l'aide des dessins annexés dans lesquels :
- la figure 1 représente une vue partielle, schématique, d'un mode de réalisation de l'invention où l'exposition aux rayonnements actiniques se fait sous le dispositif de coupe et sur un organe récepteur,
- la figure 2 représente une vue partielle, schématique, d'un autre mode de réalisation de l'invention où l'exposition aux rayonnements actiniques se fait lors du transfert d'un organe récepteur à un autre,
- la figure 3 représente une vue partielle, schématique, d'un mode de réalisation préféré de la présente invention où l'exposition aux rayonnements actiniques se fait sur un organe récepteur soumis à des vibrations et au-dessus d'un dispositif de soufflage.

Il convient de remarquer que les modes de réalisation de l'invention mentionnés ci-après ne sont, en aucun cas, limitatifs mais illustratifs.

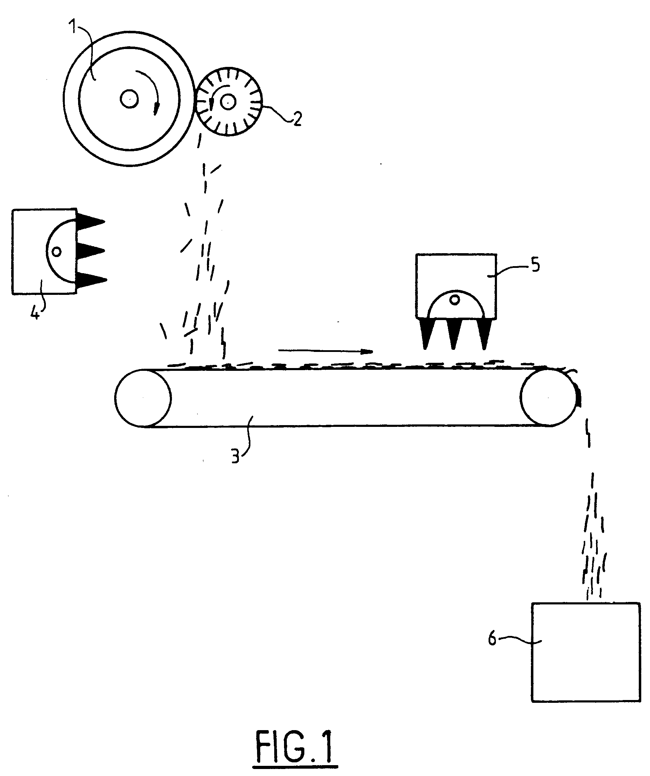

Dans le mode de réalisation de l'invention illustré figure 1, des filets de verre fondu sont étirés à partir des orifices d'une ou plusieurs filières, non représentées, pour donner des filaments que l'on revêt d'un ensimage non aqueux, à l'état liquide, et susceptible de réagir sous l'action d'un rayonnement actinique. Les filaments sont ensuite rassemblés en au moins un fil, le ou les fils étant subséquemment coupés par un organe servant également à les étirer tel qu'un dispositif comprenant une roue enclume 1 et une roue porte-lame 2. Les fils coupés tombent ensuite sur un organe récepteur 3 tel qu'un convoyeur en mouvement, ce convoyeur étant, de préférence, un tapis métallique et sont soumis pendant leur chute à une irradiation préalable par une source de rayonnement ultraviolet 4 placée sous l'organe de coupe. Ils sont ensuite soumis à une irradiation définitive sur l'organe récepteur par une seconde source de rayonnement ultraviolet 5 avant d'être recueillis par un organe de collecte 6. Il est à signaler que l'irradiation préalable des fils coupés permet d'effectuer une pré-réticulation de l'ensimage déposé sur les fils en question, laquelle pré-réticulation permet de réduire les phénomènes de collage des fils sur l'organe récepteur. En outre, dans le cas de compositions d'ensimage peu réactives, cette irradiation permet d'amorcer le processus de réticulation que la deuxième réticulation vient parachever.

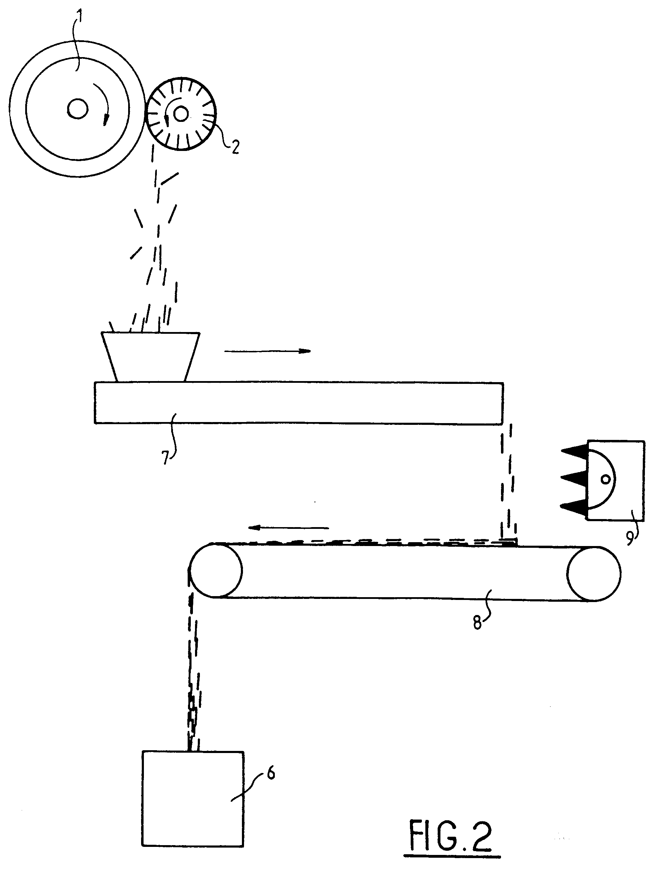

Le second mode de réalisation de la présente invention, illustré figure 2, est plus adapté au cas où la composition d'ensimage utilisée possède une plus grande réactivité.

Dans ce mode de réalisation de l'invention, les fils coupés ne sont pas soumis à une irradiation préalable sous le dispositif de coupe ; ils sont en premier lieu collectés sur un organe récepteur 7 préférentiellement animé d'un mouvement vibratoire, tel qu'un tapis doseur vibrant, puis ils tombent sur un second organe récepteur tel qu'un convoyeur en mouvement 8 et sont soumis, pendant ce transfert, à l'action d'un rayonnement actinique par une source de rayonnement ultraviolet 9.

Dans ce mode de réalisation de l'invention, l'irradiation est effectuée en une seule étape. Si l'irradiation s'opère toujours lors de la chute des fils coupés, en revanche l'emplacement de la source d'irradiation est différent et ne conduit pas aux mêmes résultats que ceux observés dans le cas d'une irradiation sous dispositif de coupe.

En effet, lors de l'exposition des fils à un rayonnement actinique pendant le transfert du premier organe récepteur au second, les fils bien répartis sur le premier organe récepteur du fait, notamment, de l'utilisation d'un tapis vibrant, tombent en rideau devant la source d'irradiation et à faible vitesse, ce qui favorise une irradiation homogène des fils ensimés.

Ce n'est pas le cas de l'irradiation sous dispositif de coupe où les fils tombent en chute libre à distance variable de la source d'irradiation et avec une vitesse initiale plus élevée et ne sont, par conséquent, pas tous exposés à la même quantité de rayonnement. L'irradiation sous dispositif de coupe ne vise, par conséquent, dans la plupart des cas, qu'à effectuer un début de réticulation, alors que l'irradiation pendant le transfert d'un organe récepteur à un autre permet de réaliser la réticulation totale.

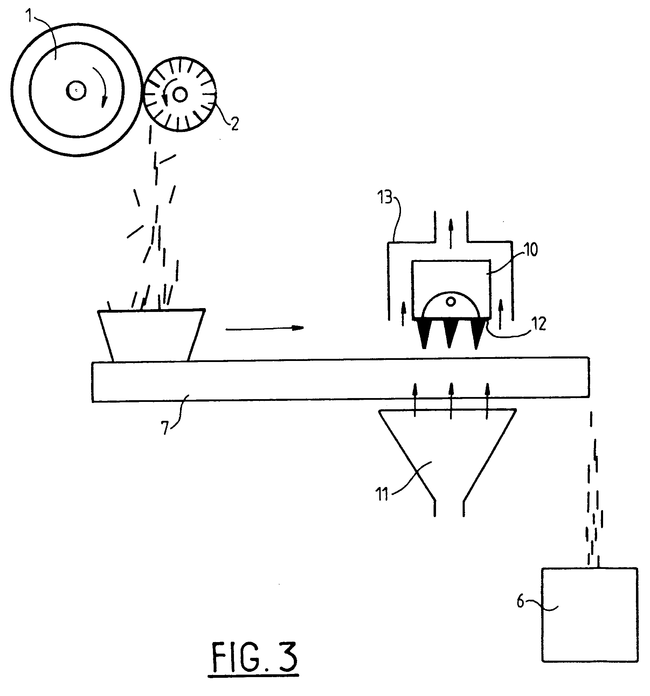

La figure 3 illustre un mode préféré de réalisation de l'invention. Dans ce mode, les fils coupés sont recueillis sur un tapis vibrant 7, avantageusement métallique et muni de perforations non représentées, puis sont soumis à un rayonnement actinique par une source de rayonnement ultraviolet 10 alors qu'ils se trouvent au-dessus d'un organe de soufflage 11. La source d'irradiation est, dans ce cas, protégée de l'air soufflé par une plaque de silice 12 et les courants gazeux sont évacués par l'intermédiaire d'un caisson 13 entourant la source d'irradiation comme indiqué à l'aide des flèches. Les fils coupés ainsi irradiés sont ensuite recueillis par un organe de collecte 6.

Il peut également être possible, dans ce mode de réalisation de l'invention, de recueillir préalablement les fils coupés sur un tapis vibrant, les fils tombant ensuite sur un convoyeur métallique perforé où s'effectue l'irradiation au-dessus d'un organe de soufflage.

Le procédé selon la présente invention permet d'obtenir des fils coupés présentant de bonnes caractéristiques d'intégrité, de coulabilité, de compatibilité avec les matrices à renforcer.

Les exemples suivants illustrent, de manière non exhaustive, la présente invention en donnant notamment des compositions d'ensimage utilisables dans le cadre de cette invention et des résultats d'intégrité dynamique sur les fils coupés obtenus.

### EXEMPLE 1

Dans cet exemple, des filaments sont formés par étirage de filets de verre fondu à partir des orifices d'une filière et revêtus de la composition d'ensimage suivante, exprimée en pourcentages pondéraux :

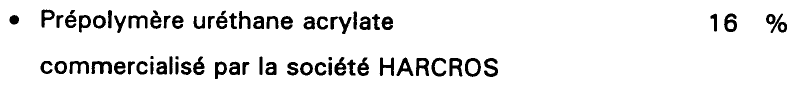

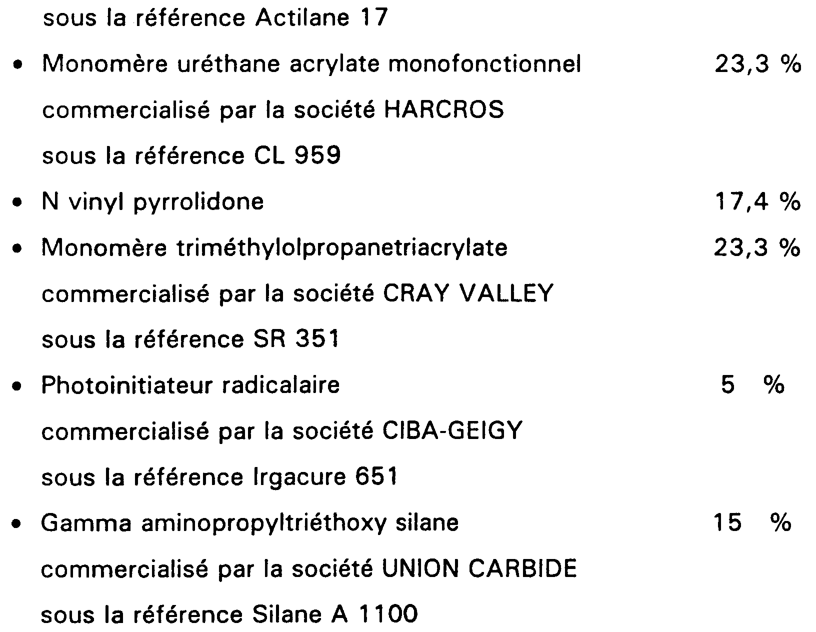

Les filaments ainsi ensimés sont ensuite rassemblés en un fil qui est coupé par un organe servant également à l'étirer, puis les fils coupés sont collectés sur un tapis métallique vibrant et soumis à un rayonnement ultraviolet alors qu'ils passent au-dessus d'un dispositif de soufflage.

Afin d'évaluer l'intégrité dynamique des fils coupés obtenus, les fils coupés en question sont mélangés avec des granulés de matière thermoplastique puis mis en rotation pendant une dizaine de minutes avant d'être récupérés et passés sur un tamis vibrant. La bourre subsistante est ensuite récupérée et pesée pour établir le taux de bourre correspondant. L'intégrité est alors d'autant plus grande que ce taux est plus faible.

Le taux de bourre obtenu avec les fils coupés préparés selon cet exemple est de 0 %.

### EXEMPLE 2

Dans cet exemple, les fils coupés sont obtenus selon la même méthode que précédemment décrite dans l'exemple 1, les filaments étant revêtus de la composition d'ensimage suivante, exprimée en pourcentages pondéraux :

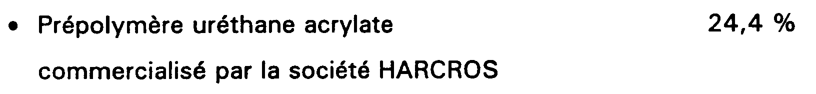

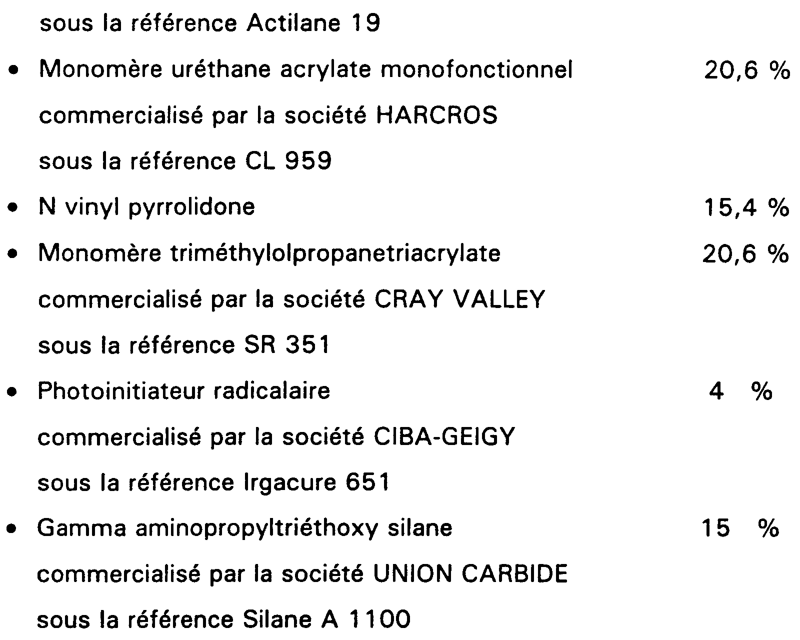

Le taux de bourre obtenu avec les fils coupés préparés selon cet exemple est de 3 %.

Les fils coupés obtenus selon la présente invention sont, notamment, destinés au renforcement de résines thermoplastiques ou thermodurcissables, au renforcement du ciment...

## Revendications

1. Procédé de fabrication de fils coupés selon lequel des fils de verre composés de filaments continus revêtus d'un ensimage non aqueux, c'est à dire une composition d'ensimage comprenant moins de 10% d'eau, à l'état liquide et susceptible de réagir sous l'action d'un rayonnement actinique, sont coupés par un organe servant également à les étirer ou à les entraîner mécaniquement avant d'être soumis à un rayonnement actinique.

2. Procédé selon la revendication 1, caractérisé en ce que les fils coupés sont soumis à l'action d'un rayonnement actinique après coupe et avant réception sur un organe récepteur.

3. Procédé selon l'une des revendications 1 ou 2, caractérisé en ce que les fils coupés sont collectés sur un organe récepteur puis soumis à l'action d'au moins un rayonnement actinique.

4. Procédé selon l'une des revendications 2 ou 3, caractérisé en ce que les fils coupés sont soumis à l'action d'un rayonnement actinique entre l'organe récepteur et un second organe récepteur sur lequel ils sont collectés.

5. Procédé selon l'une des revendications 2 à 4, caractérisé en ce que les fils coupés sont collectés sur un second organe récepteur puis soumis à l'action d'au moins un rayonnement actinique.

6. Procédé selon l'une des revendications 2 à 5, caractérisé en ce que les fils coupés sont soumis à l'action d'un rayonnement actinique sur au moins un organe récepteur.

7. Procédé selon la revendication 6, caractérisé en ce que les fils coupés sont soumis à l'action d'un rayonnement actinique sur ledit organe récepteur, alors qu'ils passent au-dessus d'un organe de soufflage.

8. Procédé selon l'une des revendications 2 à 7, caractérisé en ce que le premier organe récepteur est soumis à des vibrations.

9. Dispositif de mise en oeuvre du procédé tel que défini dans les revendications précédentes comprenant au moins un organe de coupe et d'étirage ou un organe de coupe et d'entraînement des fils ensimés, au moins un organe récepteur des fils coupés, lesdits fils coupés tombant par simple gravité d'un organe sur un autre, et au moins une source de rayonnement actinique dirigée vers l'une des zones de chute des fils coupés d'un organe sur un autre et/ou une source de rayonnement actinique dirigée vers une zone d'un organe récepteur et associée avec au moins un organe de soufflage situé sous ladite zone.

10. Dispositif selon la revendication 9, caractérisé en ce qu'il comprend deux sources de rayonnement actinique, la première se trouvant entre l'organe de coupe et d'étirage ou l'organe de coupe et d'entraînement et un organe récepteur et la seconde étant dirigée vers une zone d'un organe récepteur.

11. Dispositif selon la revendication 9, caractérisé en ce qu'il comprend deux organes récepteurs et une source de rayonnement actinique se trouvant entre les deux organes récepteurs.

12. Dispositif selon la revendication 9, caractérisé en ce qu'il comprend une source de rayonnement actinique dirigée vers une zone d'un organe récepteur et associée à un organe de soufflage situé sous ladite zone, ladite source de rayonnement actinique étant protégée par une plaque de silice et entourée par un caisson d'évacuation des courants gazeux.

13. Dispositif selon l'une des revendications 9 à 12, caractérisé en ce que le ou les organes récepteurs sont des convoyeurs métalliques.

14. Dispositif selon l'une des revendications 9 à 13, caractérisé en ce que l'organe récepteur situé sous l'organe de coupe et d'étirage ou sous l'organe de coupe et d'entraînement est animé d'un mouvement vibratoire.

## Claims

1. Process for manufacturing cut threads according to which glass threads composed of continuous filaments coated with a non-aqueous size, that is a size composition comprising less than 10% water, which size is in the liquid state and capable of reacting under the effect of actinic radiation, are cut by a member also used for drawing them or entraining them mechanically before being subjected to actinic radiation.

2. Process according to Claim 1, characterized in that the cut threads are subjected to the effect of actinic radiation after cutting and before being collected on a receiver member.

3. Process according to either of Claims 1 and 2, characterized in that the cut threads are collected on a receiver member and are then subjected to the effect of at least one actinic radiation process.

4. Process according to either of Claims 2 and 3, characterized in that the cut threads are subjected to the effect of actinic radiation between the receiver member and a second receiver member on which they are collected.

5. Process according to any one of Claims 2 to 4, characterized in that the cut threads are collected on a second receiver member and are then subjected to the effect of at least one actinic radiation process.

6. Process according to any one of Claims 2 to 5, characterized in that the cut threads are subjected to the effect of actinic radiation on at least one receiver member.

7. Process according to Claim 6, characterized in that the cut threads are subjected to the effect of actinic radiation on the receiver member whilst they pass over a blower member.

8. Process according to any one of Claims 2 to 7, characterized in that the first receiver member is subjected to vibrations.

9. Device for performing the process as defined in the preceding Claims, comprising at least one cutting and fibre-drawing member or a member for cutting and entraining the sized threads, at least one member for receiving the cut threads, said cut threads falling simply by gravity from one member to another, and at least one source of actinic radiation directed towards one of the areas in which the cut threads fall from one member to another and/or a source of actinic radiation directed towards an area of a receiver member and associated with at least one blower member located below this area.

10. Device according to Claim 9, characterized in that it comprises two sources of actinic radiation, the first being between the cutting and fibre-drawing member or the cutting and entraining member and a receiver member and the second being directed towards an area of a receiver member.

11. Device according to Claim 9, characterized in that it comprises two receiver members and a source of actinic radiation located between the two receiver members.

12. Device according to Claim 9, characterized in that it comprises a source of actinic radiation directed towards an area of a receiver member and associated with a blower member located below this area, the source of actinic radiation being protected by a silica plate and surrounded by a caisson for evacuating the gaseous currents.

13. Device according to any one of Claims 9 to 12, characterized in that the receiver member or members is or are metal conveyors.

14. Device according to any one of Claims 9 to 13, characterized in that the receiver member located below the cutting and fibre-drawing member or below the cutting and entraining member is moved by a vibrating motion.

## Patentansprüche

1. Verfahren zur Herstellung von Kurzfäden, gemäß welchem Glasfäden, welche aus endlosen Filamenten bestehen, die mit einer nichtwäßrigen Schlichte, d.h. einer weniger als 10 % Wasser enthaltenden Schlichtezusammensetzung, überzogen sind, die im flüssigen Zustand vorliegt und in der Lage ist, unter Einwirkung einer aktinischen Strahlung zu reagieren, von einem Mittel zerschnitten werden, das auch dazu dient, sie zu ziehen oder mechanisch fortzubewegen, bevor sie einer aktinischen Strahlung ausgesetzt werden.

2. Verfahren nach Anspruch 1, **dadurch gekennzeichnet, daß** die Kurzfäden nach dem Zerschneiden und vor der Aufnahme auf einer Aufnahmeeinrichtung der Einwirkung einer aktinischen Strahlung ausgesetzt werden.

3. Verfahren nach Anspruch 1 oder 2, **dadurch gekennzeichnet, daß** die Kurzfäden auf einer Aufnahmeeinrichtung gesammelt und anschließend der Einwirkung mindestens einer aktinischen Strahlung ausgesetzt werden.

4. Verfahren nach Anspruch 2 oder 3, **dadurch gekennzeichnet, daß** die Kurzfäden zwischen der Aufnahmeeinrichtung und einer zweiten Aufnahmeeinrichtung, auf welcher sie gesammelt werden, der Einwirkung einer aktinischen Strahlung ausgesetzt werden.

5. Verfahren nach einem der Ansprüche 2 bis 4, **dadurch gekennzeichnet, daß** die Kurzfäden auf einer zweiten Aufnahmeeinrichtung gesammelt und anschließend der Einwirkung mindestens einer aktinischen Strahlung ausgesetzt werden.

6. Verfahren nach einem der Ansprüche 2 bis 5, **dadurch gekennzeichnet, daß** die Kurzfäden der Einwirkung einer aktinischen Strahlung auf mindestens einer Aufnahmeeinrichtung ausgesetzt werden.

7. Verfahren nach Anspruch 6, **dadurch gekennzeichnet, daß** die Kurzfäden auf der Aufnahmeeinrichtung der Einwirkung einer aktinischen Strahlung ausgesetzt werden, während sie über eine Blaseinrichtung laufen.

8. Verfahren nach einem der Ansprüche 2 bis 7, **dadurch gekennzeichnet, daß** die erste Aufnahmeeinrichtung Schwingungen ausgesetzt ist.

9. Vorrichtung zur Durchführung des Verfahrens nach den vorhergehenden Ansprüchen, welche mindestens ein Schneid- und Ziehmittel oder ein Schneid- und Fortbewegungsmittel für die mit einer Schlichte überzogenen Fäden, mindestens eine Aufnahmeeinrichtung für die Kurzfaden, wobei diese durch einfache Schwerkraft von einer Einrichtung auf die nächste fallen, und mindestens eine aktinische Strahlungsquelle, die auf eine der Zonen des Falls der Kurzfäden von einer Einrichtung auf die nächste gerichtet ist, und/oder eine aktinische Strahlungsquelle, die auf eine Zone einer Aufnahmeeinrichtung gerichtet und mit mindestens einer unter dieser Zone befindlichen Blaseinrichtung gekoppelt ist, umfaßt.

10. Vorrichtung nach Anspruch 9, **dadurch gekennzeichnet, daß** sie zwei aktinische Strahlungsquellen umfaßt, wobei die erste sich zwischen dem Schneid- und Ziehmittel oder Schneid- und Fortbewegungsmittel und einer Aufnahmeeinrichtung befindet und die Zweite auf eine Zone einer Aufnahmeeinrichtung gerichtet ist.

11. Vorrichtung nach Anspruch 9, **dadurch gekennzeichnet, daß** sie zwei Aufnahmeeinrichtungen und eine aktinische Strahlungsquelle umfaßt, die sich zwischen den beiden Aufnahmeeinrichtungen befindet.

12. Vorrichtung nach Anspruch 9, **dadurch gekennzeichnet, daß** sie eine aktinische Strahlungsquelle umfaßt, die auf eine Zone einer Aufnahmeeinrichtung gerichtet und mit einer unter dieser Zone befindlichen Blaseinrichtung gekoppelt ist, wobei diese aktinische Strahlungsquelle von einer Siliciumdioxidplatte geschützt wird und von einer Haube zum Absaugen der Gasströme umgeben ist.

13. Vorrichtung nach einem der Ansprüche 9 bis 12, **dadurch gekennzeichnet, daß** die Aufnahmeeinrichtung(en) (ein) Gurtförderer aus Metall ist (sind).

14. Vorrichtung nach einem der Ansprüche 9 bis 13, **dadurch gekennzeichnet, daß** die Aufnahmeeinrichtung, welche sich unter dem Schneid- und Ziehmittel oder dem Schneid- und Fortbewegungsmittel befindet, mit einer Schwingbewegung angetrieben wird.
